**Europäisches Patentamt**

**European Patent Office**

**Office européen des brevets**

(11) Numéro de publication: **0 323 790 B1**

(12) **FASCICULE DE BREVET EUROPEEN**

(45) Date de publication de fascicule du brevet: **23.12.92**  (51) Int. Cl.⁵: **C09H 3/00, A23J 1/10**

(21) Numéro de dépôt: **88403372.1**

(22) Date de dépôt: **30.12.88**

(54) **Procédé continu d'obtention de gélatine à partir de poudre d'os et gélatine obtenue.**

(30) Priorité: **30.12.87 FR 8718427**

(43) Date de publication de la demande:
**12.07.89 Bulletin  89/28**

(45) Mention de la délivrance du brevet:
**23.12.92 Bulletin  92/52**

(84) Etats contractants désignés:
**AT BE CH DE ES FR GB GR IT LI LU NL SE**

(56) Documents cités:
**EP-A- 0 050 431**
**FR-A- 1 062 051**

(73) Titulaire: **ELF SANOFI**
**32-34, rue Marbeuf**
**F-75008 Paris(FR)**

(72) Inventeur: **Moy, Jacques**
**683, Chemin des Espelugues**
**F-84800 Isle sur Sorgue(FR)**
Inventeur: **Takerkart, Georges**
**Villa Géa Le Jonquier Saumane**
**F-84800 Isle sur Sorgue(FR)**

(74) Mandataire: **Gillard, Marie-Louise et al**
**Cabinet Beau de Loménie 55, Rue d'Amsterdam**
**F-75008 Paris(FR)**

## Description

L'invention concerne un procédé continu d'obtention de gélatine à partir de poudre d'os et la gélatine obtenue.

On sait qu'il existe deux types de gélatine : celle de type A, de point isoélectrique compris entre 6 et 7, extraite par traitement avec une solution aqueuse chaude d'acide, généralement d'acide sulfurique, d'os concassés, dégraissés et déminéralisés et celle de type B, de point isoélectrique voisin de 5, obtenue par traitement des os avec une solution aqueuse basique, généralement d'hydroxyde de calcium. Ces procédés d'obtention ont été largement décrits et on peut se référer notamment à l'ouvrage de A.G. Ward et A. Courts : "The Science and Technology of Gelatin" Academic Press, 1977.

Le procédé selon l'invention est un procédé de type acide, qui met en oeuvre des os dégraissés de porcins, d'ovins et de bovins, sous forme de poudre, particulièrement économique puisque c'est un procédé continu par lequel on extrait 95 % de la gélatine contenue dans l'os, qui implique des installations de taille nettement inférieure aux installations classiques, de 30 à 40 fois, et dans lequel la durée des traitements est nettement plus courte que dans les procédés connus puisque le bouillon de gélatine est obtenu 4 heures environ après l'introduction de la poudre d'os dans l'installation.

En outre, le procédé selon l'invention permet d'utiliser une matière première peu valorisée, c'est-à-dire la poudre formée lors du broyage et du calibrage des os à gélatine, qui sont mis en oeuvre dans les procédés classiques.

Un autre avantage du procédé réside dans la possibilité d'obtenir des gélatines de différentes caractéristiques ; on peut préparer des gélatines acides ayant une force en gel et une viscosité similaires à celles produites par le procédé classique, mais on prépare aussi des gélatines ayant une force en gel supérieure à 300 blooms, par exemple de 320 à 360 blooms, mesurée selon les normes du British Standard, alors que les gélatines résultant des procédés classiques, même celles de type A, ont une force en gel inférieure à 300 blooms ; par ailleurs, la vitesse de prise en gel de cette nouvelle qualité de gélatine est environ 2 fois celle des gélatines acides classiques.

Enfin, le procédé selon l'invention permet aussi d'obtenir du phosphate bicalcique, qui peut notamment être utilisé comme additif en alimentation animale, tout comme l'osséine isolée en fin de procédé.

Le procédé, selon l'invention, est mis en oeuvre dans une installation dans laquelle les solides sont agités avec les solutions aqueuses acides d'extraction, puis avec des solutions de lavage ; il comprend essentiellement :

1) un traitement de la poudre d'os par une solution aqueuse froide d'acide, suivi de la séparation des solides, ou osséine, de la phase liquide contenant le phosphate monocalcique puis de leur lavage à l'eau ;

2) un traitement de l'osséine lavée par une solution aqueuse chaude d'acide, suivi de la séparation du bouillon de gélatine, de l'osséine et de l'isolement de la gélatine.

Les poudres d'os mises en oeuvre ont une granulométrie comprise entre 0,1 mm et 2 mm, de préférence comprise entre 0,25 mm et 1,6 mm ; les os ont été séparés de la viande et dégraissés avant leur broyage.

Le premier traitement, c'est-à-dire l'étape d'acidulation, est effectué avec une solution aqueuse acide d'un acide minéral ou organique qui permet d'effectuer la déminéralisation de l'os sans en décomposer la partie organique et notamment sans entraîner d'hydroxyproline : on peut citer l'acide chlorhydrique et l'acide éthylénediaminetétraacétique ; on opère à une température inférieure à la température ambiante, de préférence inférieure à 10ºC, et même inférieure à 8ºC, la quantité d'acide étant fonction du titre en phosphate tricalcique de l'os utilisé, juste suffisante ou en léger excès pour en solubiliser la totalité. On préfère l'effectuer en 2 étapes : par exemple, dans un premier temps, la poudre d'os est mise en contact quelques minutes, de 1 à 3 minutes, avec 1 litre d'une solution diluée d'acide minéral, pour 100 à 150 g de poudre d'os, par exemple une solution d'acide chlorhydrique, contenant l'équivalent de 3 à 10 g de HCl libre par litre, puis la phase liquide est séparée et le solide est traité par sensiblement le même volume d'une solution d'acide minéral, par exemple d'acide chlorhydrique, contenant l'équivalent de 30 g à 50 g de HCl libre par litre pendant 20 à 200 minutes, et de préférence 120 minutes environ. Dans ces conditions, on peut isoler du premier liquide d'acidulation et des solutions de lavage, après ajout d'un lait de chaux, un phosphate bicalcique pur, à raison de plus de 50 g pour 100 g de poudre d'os.

Le second traitement, c'est-à-dire l'étape d'extraction de la gélatine, est effectué avec une solution aqueuse d'acide minéral ou organique, comme les acides sulfurique, phosphorique ou acétique, dont la température est comprise en général entre 60ºC et 85ºC, et le pH compris entre 1,5 et 4 et de préférence compris entre 1,8 et 2,5 et mieux voisin de 2,2, la durée de contact étant comprise entre 20 et 120 minutes. L'extraction est avantageusement effectuée en 2 étapes : une première, d'une heure environ, à une

température comprise entre 60ºC et 80ºC à l'issue de laquelle on sépare l'osséine du bouillon de gélatine et on la lave à l'eau, suivie d'une seconde, à une température supérieure, pendant 20 à 40 minutes environ.

On peut alors collecter séparément les phases liquides d'extraction et de lavage des première et deuxième étapes pour isoler, après clarification des solutions, deux lots de bouillons de gélatine qui seront traités de façon classique pour obtenir deux lots de gélatine dont les propriétés viscosifiantes et gélifiantes peuvent différer légèrement, mais qui sont, tous deux, d'excellente qualité et peuvent être utilisés dans les domaines alimentaire, pharmaceutique et technique.

La clarification des solutions de gélatine peut être réalisée de façon classique par l'addition de composés comme le phosphate diammonique ou le phosphate bicalcique associé au sulfate d'aluminium ou par une coprécipitation en présence de chaux et d'acide phosphorique, suivies d'une filtration ou d'une centrifugation ; on préfère introduire dans les solutions troubles de l'hydroxyde de calcium, du phosphate d'ammonium et un sel hydro soluble d'aluminium, pour former un phosphate d'aluminium qui en précipitant entraîne les impuretés en suspension ; dans ces conditions, la clarification peut être effectuée en continu.

Les bouillons clarifiés sont ensuite déminéralisés par passage sur des résines échangeuses d'ions puis concentrés par évaporation sous vide par une autre technique classique dans le domaine, jusqu'à obtention d'un concentrat qui sera stérilisé avant d'être séché à l'air chaud pour donner la gélatine sous forme d'une poudre s'écoulant librement.

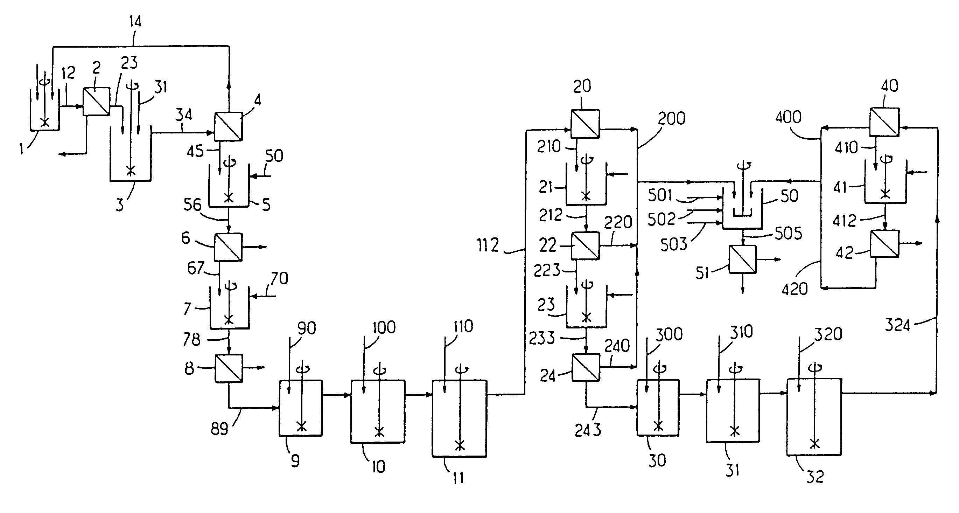

Une installation pour la mise en oeuvre du procédé de l'invention, dans lequel les phases d'acidulation et d'extraction sont toutes deux effectuées en deux étapes, est représentéeschématiquement, à titre d'exemple, sur la figure unique. Cette installation est constituée d'une cuve 1, thermostatée dans laquelle on introduit la poudre d'os et la solution d'acide recyclée par la conduite 14 ; la conduite 12 permet le passage du mélange de la cuve 1 dans le séparateur liquide-solide 2 ; la conduite 23 permet l'introduction du solide séparé dans la cuve thermostatée 3, alimentée en solution acide par la conduite 31. Le mélange est transféré de la cuve 3 par la conduite 34 et introduit dans le séparateur solideliquide 4, d'où le solide est transporté par la conduite 45 dans la cuve de lavage 5, qui est alimentée en eau par la conduite 50 ; la conduite 56 permet d'introduire la suspension de lavage dans le séparateur liquide-solide 6, d'où le solide séparé, par la conduite 67, est transféré dans la cuve de lavage 7, alimentée en eau par la conduite 70 ; la conduite 78 relie la cuve 7 et un séparateur liquide-solide 8, d'où le solide est transféré, par la conduite 89, dans les réacteurs d'extraction successifs 9, 10 et 11 respectivement alimentés en acide par les conduites 90, 100 et 110 ; les réacteurs sont équipés de moyens pour maintenir une température donnée à l'intérieur. A la sortie du réacteur 11, le mélange passe par la tubulure 112 dans une zone de séparation dans laquelle sont isolés les bouillons de gélatine; elle est constituée d'un séparateur liquide-solide 20 d'où le bouillon de gélatine est extrait par la conduite 200, tandis que le solide, par la conduite 210, est transféré dans une cuve de lavage 21, alimentée en eau chaude, puis dans un séparateur liquide-solide 22, d'où le bouillon de gélatine est extrait par la conduite 220 qui débouche dans la conduite 200, alors que le solide est transféré dans une autre cuve de lavage 23, alimentée en eau chaude ; la conduite 233 relie la cuve de lavage et un séparateur liquide-solide 24, d'où le liquide est transféré par la conduite 240 dans la conduite 200, tandis que le solide est introduit par la conduite 243 dans une seconde zone d'extraction constituée des réacteurs successifs 30, 31 et 32, alimentés en solution acide respectivement par les conduites 300, 310 et 320 et équipés de moyens pour maintenir une température donnée à l'intérieur. A la sortie du réacteur 32, le mélange passe, par la tubulure 324, dans une zone de séparation des bouillons de gélatine, composée d'un séparateur liquide-solide 40 d'où le liquide, par la conduite 400, est transféré dans la zone de clarification, et le solide est introduit par la conduite 410 dans une cuve de lavage 41 alimentée en eau chaude ; la conduite 412 relie la cuve 41 et un séparateur liquide-solide 42 d'où le bouillon de gélatine séparé par la conduite 420 est introduit dans la zone de clarification, tandis que le solide ou résidu d'extraction est collecté pour un éventuel traitement annexe. La zone de clarification est constituée d'une cuve de maturation 50, alimentée par les conduites 501, 502 et 503 avec des solutions aqueuses d'hydroxyde de calcium, de phosphate d'ammonium et de sulfate d'aluminium ; la conduite 505 permet de transférer le mélange de bouillon et d'agents clarifiants dans un séparateur liquide-solide 51 ; le bouillon de gélatine, extrait du séparateur 51, est ensuite traité dans une installation classique de traitement, telle que celle décrite dans "Technology of gelatin manufacture" R. Hinterwaldner dans l'ouvrage "The science and technology of gelatin" précédemment cité.

Le transfert des mélanges d'un appareil à l'autre est réalisé au moyen de pompes de circulation classiques, par exemple de type volumétrique centrifuge pour les liquides, de type péristaltique pour les suspensions. Les séparateurs sont, par exemple, à tamis rotatif. Les réacteurs d'extraction, dont la température est maintenue constante, par exemple par une circulation d'eau chaude dans une double enveloppe, sont des réacteurs à écoulement piston, de telle sorte que la distribution des temps de séjour des grains d'osséine dans Le réacteur soit la plus étroite possible autour de la valeur choisie. Les cuves de lavage 5 et 7 sont des laveurs continus de type cuves à chicanes agitées par débordement. Les cuves 1 et 3 peuvent être calorifugées et l'ensemble de l'installation après la zone d'acidulation est maintenu à une température supérieure à celle de gélification de la gélatine, tandis que les cuves d'extraction sont à une température comprise entre 60°C et 85°C.

Un autre objet de l'invention est la gélatine de type A obtenue par ce procédé, de force en gelée supérieure à 300 blooms, de viscosité supérieure ou égale à 4 mPa.s et dont le temps de prise en gel d'une solution aqueuse de concentration 7 % à 23°Cest inférieur à 100 secondes.

Des modes de mise en oeuvre du procédé de l'invention sont décrits en détail dans ce qui suit :

Exemple 1 : L'installation utilisée est celle décrite dans la figure annexée.

On introduit dans la cuve 1 la poudre d'os et une solution aqueuse d'acide chlorhydrique, refroidie à une température voisine de 8°C, contenant 3 à 10 g/l de HCl libre, à raison de 140 g de poudre d'os par litre d'acide, et on règle le débit de la pompe de circulation située sur la conduite 12 pour que le mélange pénètre dans le séparateur 2, de 1 à 3 minutes après sa formation. Après séparation du liquide, le solide est introduit dans la cuve 3, avec une solution aqueuse d'acide chlorhydrique à 50 g/l environ, dont la température est voisine de 8°C et le mélange est agité à cette température pendant 120 minutes avant d'être transféré dans le séparateur 4, d'où le solide humide est transféré dans la cuve de lavage 5 où il reste environ 7 minutes au contact de l'eau ; celle-ci y est introduite à raison d'environ 0,6 l par 100 g de poudre d'os mise en oeuvre. On effectue de préférence un second lavage dans la cuve de lavage 7 et, après passage dans le séparateur 8, le solide est transféré dans la première cuve d'extraction 9 qui contient 13 à 30 ml d'une solution aqueuse à 75°C d'acide sulfurique, dont le pH est 2,2 ; après 2 à 5 minutes dans cette zone, la masse est à 70°C et peut être transférée dans le second réacteur 10 à 75°C ; on maintient le pH du milieu à 2,2 par addition d'une solution d'acide sulfurique 4N ; après 25 minutes de séjour dans ce réacteur, l'osséine passe dans le réacteur 11 également à 75°C ; on réajuste de nouveau le pH à 2,2 par addition d'acide sulfurique 4N en continu. Après un temps de séjour moyen de 55 minutes dans les réacteurs d'extraction 9, 10 et 11, le solide est séparé d'un premier bouillon de gélatine dans le séparateur 20. Le solide est lavé successivement dans les 2 zones 21-22 et 23-24 avec de l'eau chaude à 60°C environ, et les 3 solutions de gélatine ainsi obtenues sont réunies pour être dirigées vers le circuit de clarification.

Pour cette opération, on ajuste le pH du bouillon vers 6,5-7,5 par addition d'hydroxyde de calcium, avant d'introduire 0,95 g de phosphate d'ammonium, en solution aqueuse à 200 g/l puis 25 g de sulfate d'aluminium en solution aqueuse à 200 g/l par 100 g d'os. Après 10 minutes de maturation, le mélange est filtré ou séparé par centrifugation dans le séparateur 51 pour donner un bouillon limpide qui donne, après concentration et séchage, 17,5 g de gélatine commerciale pour 100 g de poudre d'os de force en gel supérieure ou égale à 330 blooms, en général 350 blooms, mesurée selon la méthode BSI/AFNOR, et dont la viscosité d'une solution aqueuse à 60°C de concentration 6,66 % est 4,0 mPa.s (méthode BSI/AFNOR) et le temps de prise en gel inférieur ou égal à 60 s.

Le liquide isolé dans le séparateur 2 est traité par un lait de chaux pour donner 52,4 g de phosphate bicalcique pour 100 g d'os.

Le solide isolé à la sortie du séparateur 24 contient encore de la gélatine, et il peut être soumis à une seconde opération d'extraction, dans les réacteurs 30, 31 et 32, en suivant le même principe que pour la première extraction mais en opérant à 80°C et en divisant les temps de séjour dans les réacteurs par 2. Après traitement du bouillon séparé à la sortie du réacteur 32 et du bouillon obtenu lors d'un lavage à l'eau du solide restant, on obtient 7,1 g de gélatine pour 100 g d'os, de force en gelée 340 blooms environ et de même pouvoir viscosifiant que le premier lot.

Exemples 2 à 6

On effectue, dans cet exemple, l'extraction de la gélatine en une seule étape : l'osséine n'est pas retraitée à la sortie du séparateur 24.

L'acidulation est effectuée comme décrit à l'exemple 1 et les conditions d'extraction sont celles mentionnées dans le tableau 1 ; le pH et la température sont ceux existant dans les cuves 9, 10 et 11 et le temps est la durée de séjour moyenne en minutes du mélange dans chacun des réacteurs 9, 10 et 11. A la sortie du réacteur 11, le bouillon de gélatine est séparé dans le séparateur 20 et l'osséine lavée avec de l'eau à 60°C dans les cuves 21 et 23 et les bouillons de gélatine clarifiés comme à l'exemple 1 avant d'être concentrés pour isoler de la gélatine dont les caractéristiques sont précisées dans le tableau 1, ainsi que le poids en grammes pour 100 g de poudre d'os.

4

| Exemple | pH | T°C | t(min) | | | Force en gel (blooms) | Viscosité (mPa.s) | Poids (g) |
|---|---|---|---|---|---|---|---|---|
| | | | 9 | 10 | 11 | | | |
| 2 | 1,5 | 75 | 5 | 27 | 28 | 322 | 2,52 | 21 |
| 3 | 1,5 | 65 | 5 | 62 | 63 | 324 | 2,65 | 19 |
| 4 | 1,5 | 85 | 5 | 10 | 10 | 344 | 3,19 | 19 |
| 5 | 2 | 85 | 5 | 10 | 10 | 357 | 3,44 | 19 |
| 6 | 2,5 | 85 | 5 | 22 | 23 | 343 | 3,15 | 20 |

## Revendications

1. Procédé de préparation de gélatine à partir de poudre d'os, caractérisé en ce qu'on soumet en continu la poudre d'os à :
   - un premier traitement de déminéralisation par une solution aqueuse d'acide minéral ou organique à une température inférieure à la température ambiante, la quantité d'acide étant fonction du titre en phosphate tricalcique de l'os utilisé, juste suffisante ou en léger excès pour en solubiliser la totalité,
   - suivi d'un traitement pour extraire la gélatine par une solution aqueuse d'acide minéral ou organique à une température comprise entre 60°C et 85°C et à un pH compris entre 1,5 et 4, à la fin duquel on sépare le bouillon contenant la gélatine de l'osséine, on clarifie la solution et la déminéralise sur résine échangeuse d'ions.

2. Procédé selon la revendication 1, caractérisé en ce que l'acide du premier traitement est l'acide chlorhydrique.

3. Procédé selon l'une des revendications 1 ou 2, caractérisé en ce que le premier traitement est effectué à une température inférieure à 10°C.

4. Procédé selon l'une quelconque des revendications 1 à 3, caractérisé en ce que l'acide du second traitement est l'acide sulfurique ou l'acide phosphorique.

5. Procédé selon l'une quelconque des revendications 1 à 4, caractérisé en ce que le premier traitement est effectué en deux étapes dont la première dure de 1 à 3 minutes, et met en oeuvre une solution contenant 3 à 10 g d'acide par litre pour 100 à 150 g de poudre d'os et dont la seconde dure de 20 à 200 minutes, et met en oeuvre une solution contenant 30 à 50 g d'acide libre.

6. Procédé selon l'une quelconque des revendications 1 à 5, caractérisé en ce que le second traitement, de 20 minutes à 120 minutes, est effectué à une température comprise entre 60°C et 85°C et à un pH compris entre 1,8 et 2,5.

7. Procédé selon la revendication 6, caractérisé en ce que le solide séparé après le second traitement est soumis à un nouveau traitement de 20 à 40 minutes environ par une solution acide, à une température supérieure à celle du second traitement et à un pH compris entre 1,5 et 4,0 pour donner un bouillon d'où on extrait de la gélatine.

8. Procédé selon l'une quelconque des revendications 1 à 7, caractérisé en ce qu'on lave à l'eau chaude le solide issu du second traitement après séparation du liquide pour isoler un bouillon d'où l'on extrait de la gélatine.

9. Procédé selon l'une quelconque des revendications 1 à 8, caractérisé en ce que le bouillon de gélatine est clarifié par l'addition d'hydroxyde de calcium jusqu'à un pH compris entre 6,5 et 7,5 suivie de l'addition de phosphate d'ammonium et de sulfate d'aluminium puis de la séparation du précipité formé.

10. Procédé selon la revendication 9, caractérisé en ce que la clarification est effectuée en continu.

## Claims

1. Process for the preparation of gelatin from bone powder , characterized in that the bone powder is subjected continuously to:
   - a first demineralizing treatment with an aqueous organic or inorganic acid solution at a temperature below ambient temperature, the quantity of acid being dependent on the tricalcium phosphate content of the bone used, and being just enough or slightly higher, so as to solubilize the whole,
   - followed by a treatment for extracting gelatin with an aqueous solution or organic or inorganic acid at a temperature comprised between 60°0 and 85°C, at a pH varying between 1.5 and 4, at the end of which the broth containing the gelatin is separated from the ossein, the solution is clarified and demineralized on an ion-exchanging resin.

2. Process according to claim 1, characterized in that the acid in the first treatment is hydrochloric acid.

3. Process according to one of claims 1 or claim 2, characterized in that the first treatment is carried out at a temperature below 10°C.

4. Process according to any one of claims 1 to 3, characterized in that the acid in the second treatment is sulfuric acid or phosphoric acid.

5. Process according to any one of claims 1 to 4, characterized in that the first treatment is carried out in two steps, the first step lasting from 1 to 3 minutes and using a solution containing 3 to 10 g of acid per liter per 100 to 150 g of bone powder , and the second step lasting from 20 to 200 minutes and using a solution containing 30 to 50 g of free acid.

6. Process according to any one of claims 1 to 5, characterized in that the second treatment, lasting from 20 minutes to 120 minutes, is carried out at a temperature between 60°C and 85°C and at a pH between 1.8 and 2.5.

7. Process according to claim 6, characterized in that the solid separated off after the second treatment is subjected to a further treatment, lasting from about 20 to 40 minutes, with an acid solution at a temperature above that of the second treatment and at a pH between 1.5 and 4.0, to give a broth from which the gelatin is extracted.

8. Process according to any one of claims 1 to 7, characterized in that the solid resulting from the second treatment after separation of the liquid is washed with hot water in order to isolate a broth from which the gelatin is extracted.

9. Process according to any one of claims 1 to 8, characterized in that the gelatin broth is clarified by the addition of calcium hydroxide to a pH of between 6.5 and 7.5, followed by the addition of ammonium phosphate and aluminum sulfate and then by the separation of the precipitate formed.

10. Process according to claim 9, characterized in that the clarification is carried out continuously.

## Patentansprüche

1. Verfahren zur Herstellung von Gelatine, ausgehend von Knochenpulver, dadurch gekennzeichnet, daß das Knochenpulver kontinuierlich den folgenden Behandlungen unterzogen wird:
   - einer ersten Behandlung zur Entmineralisierung mit einer wäßrigen Lösung einer anorganischen oder organischen Säure bei einer Temperatur unterhalb der Umgebungstemperatur, wobei die Menge der Säure eine Funktion des Gehalts an dreibasischem Calciumphosphat des verwendeten Knochens ist und gerade ausreichend oder in leichtem Überschuß vorliegt, um dessen Gesamtmenge aufzulösen,
   - gefolgt von einer Behandlung zur Extraktion der Gelatine mit einer wäßrigen Lösung einer anorganischen oder organischen Säure bei einer Temperatur zwischen 60 °C und 85 °C und einem pH-Wert zwischen 1,5 und 4, an deren Ende die die Gelatine des Knochenleims enthaltende Brühe abgetrennt und die Lösung geklärt und über einem Ionenaustauscherharz entmineralisiert wird.

2. Verfahren nach Anspruch 1, dadurch gekennzeichnet, daß die Säure der ersten Behandlung Salzsäure ist.

3. Verfahren nach einem der Ansprüche 1 oder 2, dadurch gekennzeichnet, daß die erste Behandlung bei einer Temperatur unter 10 °C durchgeführt wird.

4. Verfahren nach einem der Ansprüche 1 bis 3, dadurch gekennzeichnet, daß die Säure der zweiten Behandlung Schwefelsäure oder Phosphorsäure ist.

5. Verfahren nach einem der Ansprüche 1 bis 4, dadurch gekennzeichnet, daß die erste Behandlung in zwei Schritten durchgeführt wird, wobei der erste 1 bis 3 Minuten dauert und bei diesem eine Lösung von 3 bis 10 g Säure/l auf 100 bis 150 g Knochenpulver verwendet wird, und wobei der zweite 2 bis 200 Minuten dauert und bei diesem eine Lösung verwendet wird, die 30 bis 50 g freie Säure enthält.

6. Verfahren nach einem der Ansprüche 1 bis 5, dadurch gekennzeichnet, daß die zweite Behandlung von 20 Minuten bis 120 Minuten bei einer Temperatur zwischen 60 °C und 85 °C und einem pH-Wert zwischen 1,8 und 2,5 durchgeführt wird.

7. Verfahren nach Anspruch 6, dadurch gekennzeichnet, daß der nach der zweiten Behandlung abgetrennte Feststoff einer erneuten Behandlung von ungefähr 20 bis 40 Minuten mit einer sauren Lösung bei einer Temperatur über der der zweiten Behandlung und einem pH-Wert zwischen 1,5 und 4,0 unterzogen wird, um eine Brühe zu erhalten, aus der die Gelatine extrahiert wird.

8. Verfahren nach einem der Ansprüche 1 bis 7, dadurch gekennzeichnet, daß der aus der zweiten Behandlung nach der Abtrennung der Flüssigkeit erhaltene Feststoff mit warmem Wasser gewaschen wird, um eine Brühe zu erhalten, aus der die Gelatine extrahiert wird.

9. Verfahren nach einem der Ansprüche 1 bis 8, dadurch gekennzeichnet, daß die Gelatinebrühe durch Zugabe von Calciumhydroxid bis zu einem pH-Wert zwischen 6,5 und 7,5 und anschließende Zugabe von Ammoniumphosphat und Aluminiumsulfat geklärt und anschließend die Trennung des gebildeten Niederschlags durchgeführt wird.

10. Verfahren nach Anspruch 9, dadurch gekennzeichnet, daß die Klärung kontinuierlich durchgeführt wird.